# EUROPEAN PATENT APPLICATION

(11) **EP 4 489 161 A2**
(43) Date of publication of application: **08.01.2025**
(21) Application number: 24181840.0
(22) Date of filing: 12.06.2024
(51) Int. Cl.: H01M 10/04, H01M 50/244, H01M 50/211, H01M 50/507, H01M 50/516

(54) **BATTERY DEVICE MANUFACUTRING SYSTEM**

(30) Priority: 14.06.2023 KR 20230076345
(71) Applicant: SK On Co., Ltd., Seoul 03161 (KR)
(72) Inventor: JI, Seok Hwan, 34124 Daejeon (KR); KIM, Hyuk Gu, 34124 Daejeon (KR); SHIN, Kyung Jae, 34124 Daejeon (KR); LEE, Hae Rin, 34124 Daejeon (KR); JUNG, Yong Hun, 34124 Daejeon (KR); CHOI, Kyu Han, 34124 Daejeon (KR)
(74) Representative: Stolmár & Partner Patentanwälte PartG mbB

(57) **Abstract**

A battery device manufacturing system is disclosed.

In some embodiments, the battery device manufacturing system includes a plurality of first manufacturing lines configured to manufacture a plurality of battery cells and a cell assembly in which the plurality of battery cells are stacked, a plurality of second manufacturing lines configured to couple a busbar assembly to the cell assembly to manufacture a sub-battery module, and a plurality of third manufacturing lines configured to couple the sub-battery module to a case to manufacture a battery module, wherein one of the plurality of third manufacturing lines is configured to receive the sub-battery module from each of two second manufacturing lines among the plurality of second manufacturing lines.

## Description

### BACKGROUND

### 1. FIELD

Various embodiments of the present disclosure generally relate to a battery device manufacturing system.

### 2. DESCRIPTION OF RELATED ART

Unlike primary batteries, secondary batteries may be charged and discharged and may be applied to devices within various fields, such as digital cameras, mobile phones, laptops, hybrid vehicles, electric vehicles, and energy storage systems (ESSs). The secondary batteries may include a lithium ion battery, a nickel-cadmium battery, a nickel-metal hydride battery, or a nickel-hydrogen battery.

Secondary batteries are manufactured as flexible pouch-type battery cells or rigid prismatic or cylindrical can-type battery cells. A plurality of battery cells may be formed as a stacked cell assembly.

The stacked cell assembly may be disposed inside a case to form a battery module, and a plurality of battery modules may be disposed inside a pack housing to form a battery pack.

### SUMMARY

For mass production of battery devices (e.g., battery modules or battery packs), battery device manufacturing systems may include a plurality of manufacturing lines. For example, a battery device manufacturing system may include a plurality of manufacturing lines arranged in a logistics structure (e.g., an in-line method) flowing in one direction from input of basic components to discharge of final battery modules. However, in the case of manufacturing a battery module including a plurality of (e.g., two) sub-battery modules, space utilization may be reduced in an in-line type battery device. In addition, in an in-line type battery device manufacturing system, worker's movements may increase and simultaneous production of various models may not be easy. In addition, in the in-line type battery device manufacturing system, if a failure occurs in some manufacturing devices, work may be stopped overall, resulting in low production efficiency.

The present disclosure can be implemented in some embodiments to provide a battery device manufacturing system capable of improving space utilization and worker movement efficiency.

The present disclosure can be implemented in some embodiments to provide a battery device manufacturing system capable of increasing production efficiency by simultaneously producing various models without changing workers.

The present disclosure can be implemented in some embodiments to provide a battery device manufacturing system capable of increasing production efficiency by manufacturing battery devices through various paths when a failure occurs in some manufacturing lines.

The battery device manufactured by the battery device manufacturing system of the present disclosure may be widely applied in green technology fields, such as electric vehicles, battery charging stations, and solar power generation and wind power generation using batteries. In addition, the battery device manufactured by the battery device manufacturing system of the present disclosure may be used in eco-friendly electric vehicles, hybrid vehicles, etc. to prevent climate change by suppressing air pollution and greenhouse gas emissions.

In some embodiments of the present disclosure, a battery device manufacturing system includes a plurality of first manufacturing lines configured to manufacture a plurality of battery cells and a cell assembly in which the plurality of battery cells are stacked; a plurality of second manufacturing lines configured to couple a busbar assembly to the cell assembly to manufacture a sub-battery module; and a plurality of third manufacturing lines configured to couple the sub-battery module to a case to manufacture a battery module, wherein one of the plurality of third manufacturing lines is configured to receive the sub-battery module from each of two second manufacturing lines among the plurality of second manufacturing lines.

The battery device manufacturing system may further include a first transfer device configured to transfer the cell assembly from the plurality of first manufacturing lines to the plurality of second manufacturing lines; and a second transfer device configured to transfer the sub-battery module from the plurality of second manufacturing lines to the plurality of third manufacturing lines.

The plurality of first manufacturing lines may include at least one first cell assembly manufacturing line configured to manufacture a first cell assembly and at least one second cell assembly manufacturing line configured to manufacture a second cell assembly, different from the first cell assembly, the plurality of second manufacturing lines may include at least one first sub-battery module manufacturing line configured to manufacture a first sub-battery module and at least one second sub-battery module manufacturing line configured to manufacture a second sub-battery module, different from the first sub-battery module, and the plurality of third manufacturing lines may include at least one first battery device manufacturing line configured to manufacture a first battery device and at least one second battery device manufacturing line configured to manufacture a second battery device, different from the first battery device.

The first transfer device may include a 1-1 transfer device configured to transfer the first cell assembly from the at least one first cell assembly manufacturing line to the at least one first sub-battery module manufacturing line, and a 1-2 transfer device configured to transfer the second cell assembly from the at least one second cell assembly manufacturing line to the at least one second sub-battery module manufacturing line.

The second transfer device may include a 2-1 transfer device configured to transfer the first sub-battery module from the at least one first sub-battery module manufacturing line to the at least one first battery device manufacturing line and a 2-2 transfer device configured to transfer the second sub-battery module from the at least one second sub-battery module manufacturing line to the at least one second battery device manufacturing line.

The first transfer device and the second transfer device may include at least one of an overhead conveyer belt or an autonomous vehicle.

At least a portion of the first transfer device may be located between the plurality of first manufacturing lines and the plurality of second manufacturing lines and between the plurality of first manufacturing lines and the plurality of third manufacturing lines.

At least a portion of the second transfer device may be located between the plurality of second manufacturing lines and the plurality of third manufacturing lines.

The plurality of first manufacturing lines may be arranged in a first direction, the plurality of second manufacturing lines may be arranged in a second direction, the plurality of third manufacturing lines may be arranged in a third direction, and the third direction may be different from the first direction or the second direction.

The second direction may be parallel to the first direction, and the third direction may be perpendicular to the first direction and the second direction.

Each of the plurality of first manufacturing lines may include at least one of a device for measuring insulation resistance of the plurality of battery cells, a device for measuring an open circuit voltage of the plurality of battery cells, a device for cutting and bending an electrode lead of the battery cells, a cell assembly stacking device, a thermal barrier attachment device, and an adhesive member attachment device.

Each of the plurality of second manufacturing lines may include at least one of a welding device for coupling the cell assembly to the busbar assembly, a welding inspection device, a sensing module assembly device, an insulating cover assembly device, and an end plate coupling device.

Each of the plurality of third manufacturing lines may include at least one of a lower case supply device, an adhesive application device for applying an adhesive to a lower case, a sub-battery module assembly device for coupling the sub-battery module to the lower case, an upper case coupling device, a sensing module coupling device, a safety cap coupling device, a device for inspecting weight of the battery device, a device for inspecting dimensions of the battery device, and a device for charging and discharging the battery device.

Each of two of the plurality of second manufacturing lines may be configured to transfer the sub-battery module to one of the plurality of third manufacturing lines.

One of the plurality of second manufacturing lines may be configured to receive the cell assembly from each of two first manufacturing lines among the plurality of first manufacturing lines.

In some embodiments of the present disclosure, a battery device manufacturing system includes a plurality of first manufacturing lines configured to manufacture a plurality of battery cells and a cell assembly in which the plurality of battery cells are stacked; a plurality of second manufacturing lines configured to couple a busbar assembly to the cell assembly to manufacture a sub-battery module; and a plurality of third manufacturing lines configured to couple the sub-battery module to a case to manufacture a battery module, wherein a number of the plurality of second manufacturing lines is less than a number of the plurality of first manufacturing lines, and a number of the plurality of third manufacturing lines is less than the number of the plurality of second manufacturing lines.

### BRIEF DESCRIPTION OF DRAWINGS

Certain aspects, features, and advantages of the embodiments of the present disclosure are illustrated by the following detailed description with reference to the accompanying drawings.
FIG. 1 is a schematic diagram of a battery device manufacturing system according to an embodiment of the present disclosure;
FIG. 2 is a perspective view of a battery cell according to an embodiment of the present disclosure;
FIG. 3 is an exploded perspective view of a cell assembly according to an embodiment of the present disclosure;
FIG. 4 is a diagram illustrating an assembly of a sub-battery module according to an embodiment of the present disclosure; and
FIGS. 5A and 5B are diagrams illustrating an assembly process of a battery device according to an embodiment of the present disclosure.

### DETAILED DESCRIPTION

Embodiments of the present disclosure will be described in detail with reference to the accompanying drawings. However, this description is illustrative and the present disclosure may not be limited only to the specific embodiments described by way of example.

Terms and words used in the present specification and claims to be described below should not be construed as limited to ordinary or dictionary terms, and should be construed in accordance with the technical concepts of the present disclosure based on the principle that the inventors may properly define their own inventions in their own terms in order to best describe the invention.

Therefore, the embodiments described in the present specification and the configurations illustrated in the drawings are merely embodiments of the present disclosure and are not intended to represent all possible variations of the embodiments of the technical concepts of the present disclosure. Thus it should be understood that various equivalents and modifications may be substituted in the embodiments.

Hereinafter, embodiments of the present disclosure will be described in detail with reference to the accompanying drawings. In this case, in the drawings, the same components are denoted by the same reference symbols as possible. Further, the detailed description of well-known functions and constructions which may obscure the gist of the present disclosure will be omitted. Some of the elements in the accompanying drawings are exaggerated, omitted, or schematically illustrated, and the size of each element does not entirely reflect the actual size thereof.

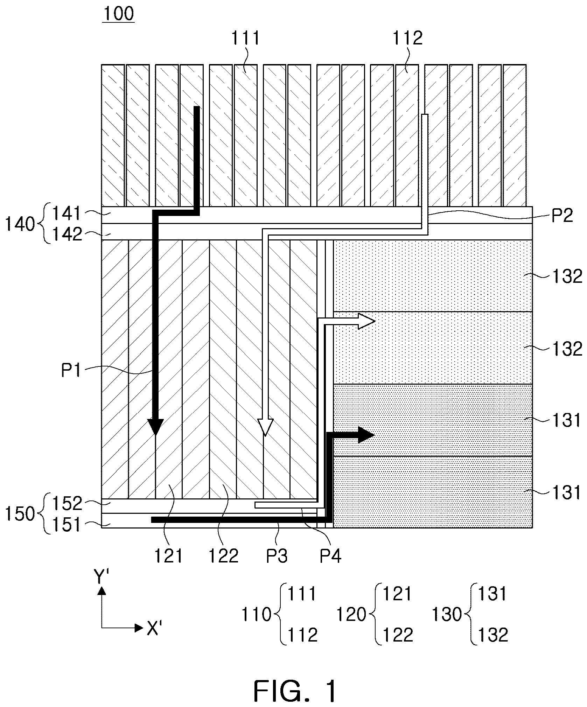

FIG. 1 is a schematic diagram of a battery device manufacturing system according to an embodiment of the present disclosure.

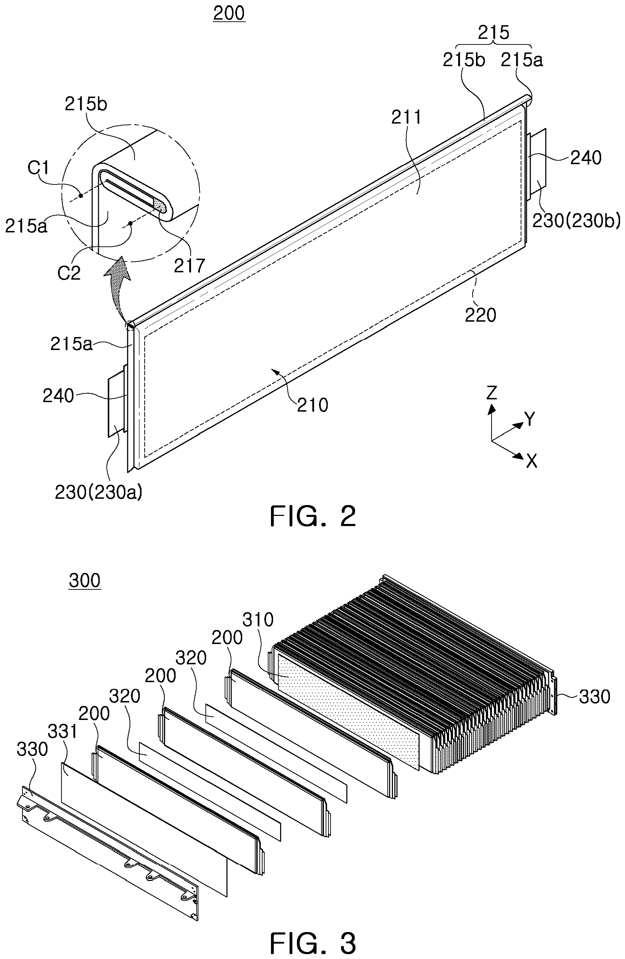

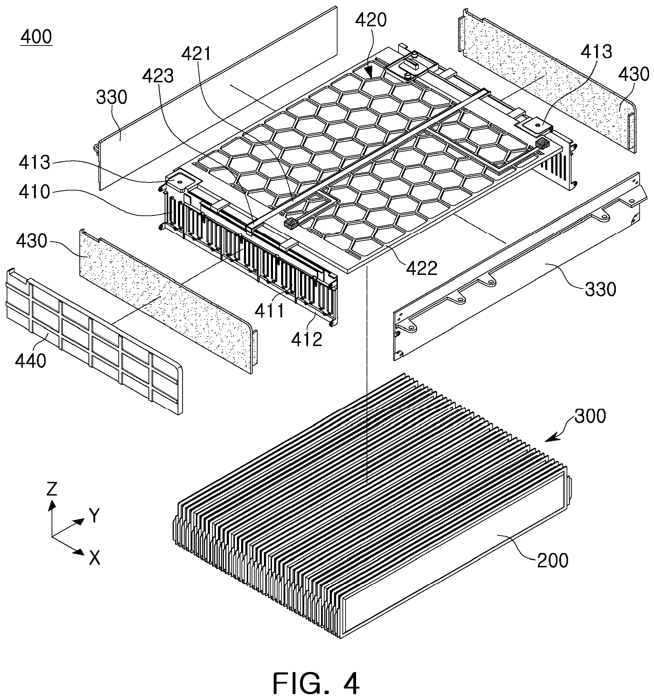

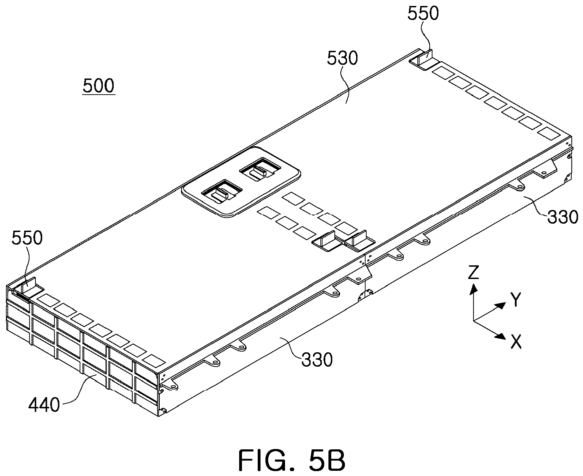

Referring to FIG. 1, a battery device manufacturing system 100 may manufacture a battery device using a plurality of manufacturing lines. For example, the battery device manufacturing system 100 may include a first manufacturing line 110 for manufacturing a battery cell (e.g., a battery cell 200 of FIG. 2) and/or a cell assembly (e.g., a cell assembly 300 of FIG. 3), a second manufacturing line 120 for manufacturing a sub-battery module (e.g., a sub-battery module 400 of FIG. 4), and a third manufacturing line 130 for manufacturing a battery device (e.g., a battery device 500 of FIG. 5B). According to an embodiment, the battery device manufacturing system 100 may be a system for manufacturing a battery device (e.g., a battery module or a battery pack). For example, the battery device manufacturing system 100 may be equipment, facilities, or a factory including manufacturing lines in which a plurality of manufacturing devices are located. According to an embodiment, the manufacturing lines 110, 120, and 130 may be equipment or facilities including a plurality of manufacturing devices.

According to an embodiment, the battery device manufacturing system 100 may have an arrangement structure to increase space utilization. For example, the battery device manufacturing system 100 may include the first manufacturing line 110, the second manufacturing line 120, and the third manufacturing line 130 arranged in a decoupled manner. The decoupled manner refers to an arrangement in which the first manufacturing line 110, the second manufacturing line 120, and the third manufacturing line 130 are grouped and arranged in directions that are not the same as each other. For example, the first manufacturing line 110, the second manufacturing line 120, and the third manufacturing line 130 may be arranged spaced apart from each other.

According to an embodiment, the plurality of first manufacturing lines 110 may be arranged in a first direction. The plurality of second manufacturing lines 120 may be arranged in a second direction. The plurality of third manufacturing lines 130 may be arranged in a third direction. In an embodiment, the third direction may be different from the first direction or the second direction. In an embodiment, the manufacturing lines 110, 120, and 130 may not be arranged in an in-line manner. For example, the manufacturing lines 110, 120, and 130 may not all be arranged in the same direction.

According to an embodiment, the first direction and the second direction may be arranged substantially parallel to each other, and the third direction may be arranged substantially perpendicularly to the first direction and the second direction. For example, the plurality of first manufacturing lines 110 and the plurality of second manufacturing lines 120 may be arranged in the first direction (e.g., a Y'-direction), and the plurality of third manufacturing lines 130 may be arranged in the second direction (e.g., an X'-direction). By arranging the manufacturing lines 110, 120, and 130 in a decoupled manner, the construction costs of the battery device manufacturing system 100 may be reduced and worker's movements may be optimized.

According to an embodiment, the battery device manufacturing system 100 may produce various products simultaneously. For example, the battery device manufacturing system 100 may manufacture a battery cell (e.g., the battery cell 200 of FIG. 2), a cell assembly (e.g., the cell assembly 300 of FIG. 3), and a sub-battery module (e.g., the sub-battery module 400 of FIG. 4) and/or a battery device (e.g., the battery device 500 of FIG. 5B) having different performances and structures.

According to an embodiment, the first manufacturing line 110 may include a plurality of first cell assembly manufacturing lines 111 for producing a first cell assembly and a plurality of second cell assembly manufacturing lines 112 for producing a second cell assembly different from the first cell assembly.

According to an embodiment, the second manufacturing line 120 may include a plurality of first sub-battery module manufacturing lines 121 for producing a first sub-battery module and a plurality of second sub-battery module manufacturing lines 122 for producing a second sub-battery module different from the first sub-battery module.

According to an embodiment, the third manufacturing line 130 may include at least one first battery device manufacturing line 131 for producing a first battery device and at least one second battery device manufacturing line 132 for producing a second battery device different from the first battery device.

According to an embodiment, the battery device manufacturing system 100 may include transfer devices 140 and 150 for moving a product being manufactured (e.g., the cell assembly 300 or the sub-battery module 400). For example, the battery device manufacturing system 100 may include a first transfer device 140 for moving the cell assembly 300 manufactured in the first manufacturing line 110 to the second manufacturing line 120 and a second transfer device 150 for moving the sub-battery module 400 manufactured in the second manufacturing line 120 to the third manufacturing line 130.

According to an embodiment, the transfer devices 140 and 150 may include a driving structure for moving the product being manufactured. For example, the transfer devices 140 and 150 may include at least one of an overhead conveyor belt (OHCV) or an auto-guided vehicle (AGV)(i.e., an autonomous vehicle).

According to an embodiment, the first transfer device 140 may transfer the plurality of cell assemblies 300 manufactured in the plurality of first manufacturing lines 110 to the plurality of second manufacturing lines 120.

According to an embodiment, the number of first transfer devices 140 may be designed based on the type of cell assembly 300 produced in the plurality of first manufacturing lines 110. For example, the first transfer device 140 may include a 1-1 transfer device 141 configured to transfer the first cell assembly manufactured in the first cell assembly manufacturing line 111 to the first sub-battery module manufacturing line 121, and a 1-2 transfer device 142 configured to transfer the second cell assembly manufactured in the second cell assembly manufacturing line 112 to the second sub-battery module manufacturing line 122. In an embodiment, the 1-1 transfer device 141 may be arranged substantially parallel to the 1-2 transfer device 142. According to an embodiment, at least a portion of the first transfer device 140 may be located between the first manufacturing line 110 and the second manufacturing line 120 and between the first manufacturing line 110 and the third manufacturing line 130. The first transfer device 140 may be located between an exit of the first manufacturing line 110 and an entrance of the second manufacturing line 120.

According to an embodiment, the number of second transfer devices 150 may be designed based on the type of sub-battery module 400 produced in the plurality of second manufacturing lines 120. For example, the second transfer device 150 may include a 2-1 transfer device 151 configured to transfer the first sub-battery module manufactured in the second sub-battery module manufacturing line 121 to the first battery device manufacturing line 131, and a 2-2 transfer device 152 configured to transfer the second sub-battery module manufactured in the second sub-battery module manufacturing line 122 to the second battery device manufacturing line 132.

In an embodiment, at least a portion of the 2-1 transfer device 151 may be arranged substantially parallel to at least a portion of the 2-2 transfer device 152. According to an embodiment, at least a portion of the second transfer device 150 may be located between the second manufacturing line 120 and the third manufacturing line 130. The second transfer device 150 may be located between an exit of the second manufacturing line 120 and an entrance of the third manufacturing line 130.

According to an embodiment, the battery device manufacturing system 100 may have a structure that minimizes any reduction in the overall efficiency of manufacturing, even in event of a failure in at least one manufacturing line among the plurality of manufacturing lines 110, 120, and 130. For example, an object (e.g., the cell assembly 300 of FIG. 3) manufactured in the plurality of first manufacturing lines 110 may be transferred to the second manufacturing line 120 using one first transfer device 140. An object (e.g., the sub-battery module 400 of FIG. 4) manufactured in the plurality of second manufacturing lines 120 may be transferred to the third manufacturing line 130 using the second transfer device 150.

According to an embodiment, the plurality of first manufacturing lines 110 may share the first transfer device 140. For example, the plurality of cell assembly manufacturing lines 111 and 112 for manufacturing the same type (model or kind) of cell assemblies may use the same first transfer devices 141 and 142, respectively. One 1-1 transfer device 141 may transfer the first cell assemblies manufactured in the plurality of first cell assembly manufacturing lines 111 to the plurality of first sub-battery module manufacturing lines 121, respectively. In an embodiment, if a failure (e.g., operation stoppage) occurs in some of the plurality of first cell assembly manufacturing lines 111, the 1-1 transfer device 141 may transfer the first cell assemblies manufactured in the other first cell assembly manufacturing lines (e.g., the first cell assembly manufacturing lines 111 in which no failure has occurred), among the plurality of first cell assembly manufacturing lines 111, to the first sub-battery module manufacturing lines 121. For example, the cell assemblies 300 manufactured in the first cell assembly manufacturing lines 111 may be transferred to the first sub-battery module manufacturing lines 121 through a first path P1 provided by the 1-1 transfer device 141.

The description of the 1-1 transfer device 141 may be applied to the 1-2 transfer device 142. For example, the cell assemblies 300 manufactured in the second cell assembly manufacturing lines 112 may be transferred to the second sub-battery module manufacturing lines 122 through a second path P2 provided by the 1-2 transfer device 142. As the plurality of first manufacturing lines 110 share one first transfer device 140, manufacturing efficiency of the battery device manufacturing system 100 may be improved.

According to an embodiment, the plurality of second manufacturing lines 120 may share the second transfer device 150. The plurality of sub-battery module manufacturing lines 121 and 122 for manufacturing the same type (model or kind) of sub-modules may use the same second transfer devices 151 and 152, respectively. For example, one 2-1 transfer device 151 may transfer the first sub-battery modules manufactured in the plurality of first sub-battery module manufacturing lines 121 to at least one first battery device manufacturing line 131, respectively. In an embodiment, if a failure (e.g., operation stoppage) occurs in some of the plurality of first sub-battery module manufacturing lines 121, the 2-1 transfer device 151 may transfer the first sub-battery module manufactured in the other first sub-battery module manufacturing lines 121, among the plurality of first sub-battery module manufacturing lines 121, to the first battery device manufacturing line 131. For example, the sub-battery modules 400 manufactured in the first sub-battery module manufacturing line 121 may be transferred to the first battery device manufacturing line 131 through a third path P3 provided by the 2-1 transfer device 151.

The description of the 2-1 transfer device 151 may be applied to the 2-2 transfer device 152. For example, the sub-battery modules 400 manufactured in the second sub-battery module manufacturing line 122 may be transferred to the second battery device manufacturing line 132 through a fourth path P4 provided by the 2-2 transfer device 152.

As the plurality of second manufacturing lines 120 share one second transfer device 150, the manufacturing efficiency of the battery device manufacturing system 100 may be improved.

According to an embodiment, one battery device 500 may include two sub-battery modules 400. One third manufacturing line 130 may receive the sub-battery modules 400 from each of two second manufacturing lines 120. Since one third manufacturing line 130 receives the sub-battery modules 400 from each of the two second manufacturing lines 120, the production efficiency of the battery device 500 may be improved.

According to an embodiment, the first manufacturing line 110 may include a plurality of manufacturing devices for processing a battery cell (e.g., the battery cell 200 of FIG. 2) and/or manufacturing a cell assembly (e.g., the cell assembly 300 of FIG. 3). For example, the first manufacturing line 110 may include at least one of a device for measuring insulation resistance (IR) and open circuit voltage (OCV) of the battery cell 200, a device for cutting and bending an electrode lead (e.g., an electrode lead 230 of FIG. 2) of the battery cell 200, a thermal barrier (e.g., mica sheet and/or thermal pad) attachment device, and/or a stacking device for stacking a plurality of battery cells 200. The first manufacturing line 110 may include known devices used for manufacturing the battery cell 200 and/or the cell assembly 300. For example, the device for measuring insulation resistance (IR) and open circuit voltage (OCV) of the battery cell 200, a device for cutting and bending an electrode lead (e.g., an electrode lead 230 of FIG. 2) of the battery cell 200, a thermal barrier (e.g., mica sheet and/or thermal pad) attachment device, and/or a stacking device for stacking a plurality of battery cells 200 are may be known devices for manufacturing the battery cell 200 and/or the cell assembly 300. However, this is an example, and the first manufacturing line 110 may further include a device for processing the battery cell 200 and manufacturing the cell assembly 300. For example, the first manufacturing line 110 may further include a hot melt application device.

According to an embodiment, the second manufacturing line 120 may include a plurality of manufacturing devices for manufacturing a sub-battery module (e.g., the sub-battery module 400 of FIG. 4). For example, the second manufacturing line 120 may include a stacking inspection device for the cell assembly 300, a welding device for coupling the cell assembly 300 to a busbar assembly, a welding inspection device, a sensing module assembly device, an insulating cover assembly device, and/or an end plate coupling device. The second manufacturing line 120 may include known devices used for manufacturing the sub-battery module 400. For example, the stacking inspection device is a device for inspecting the alignment of a plurality of battery cells in the cell assembly 300. the welding device is a device for coupling the cell assembly 300 to a busbar assembly 410 of FIG.4. The welding inspection device is a device for inspecting the cell assembly 300 and the busbar assembly 410. The sensing module assembly device is a device for assembling a sensing module assembly 420 of FIG. 4 to the busbar assembly 410. The insulating cover assembly device is a device for assembling an insulating cover 430 to the busbar assembly 410 and/or the side plate 330 of FIG. 4. The end plate coupling device is a device for coupling the end plate 440 to side plate 330 and/or insulating cover 430. However, this is an example, and the second manufacturing line 120 may further include a device for manufacturing the sub-battery module 400.

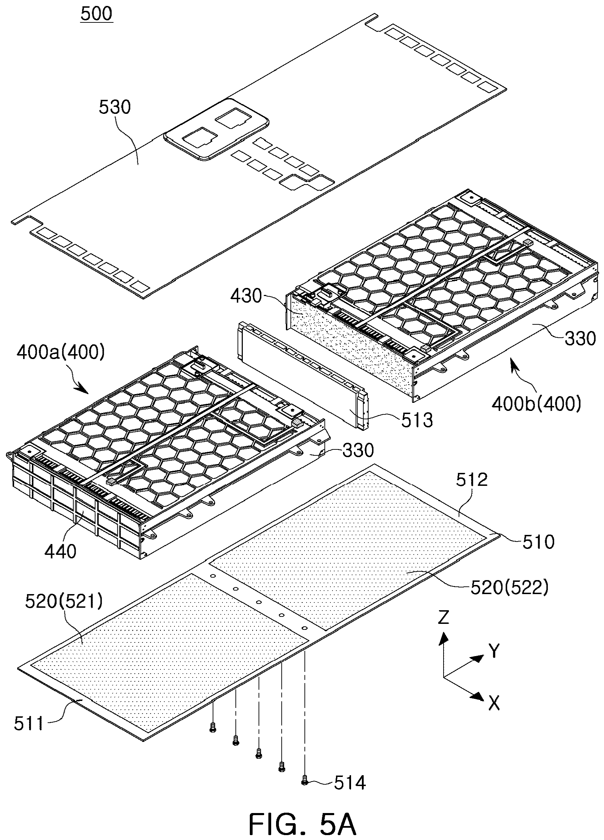

According to an embodiment, the third manufacturing line 130 may include a plurality of manufacturing devices for manufacturing a battery device (e.g., the battery device 500 of FIG. 5B). For example, the third manufacturing line 130 may include an adhesive application device for applying adhesive to a lower case, a sub-battery module assembly device for coupling the sub-battery module 400 to a lower module case, and/or a case assembly device for coupling at least one of an upper case or a side case to the sub-battery module. The third manufacturing line 130 may include known devices used for manufacturing the battery device 500. For example, the adhesive application device is a device for applying adhesive 520 of FIG. 5A to a lower case 510 of FIG. 5B. The sub-battery module assembly device is a device for coupling the sub-battery module 400 to the lower case 510. The case assembly device is a device for coupling an upper case 530 of FIG. 5A to the sub-battery module 400. The sub-battery module assembly device and/or the case assembly device may refer to a welding device (e.g., a laser welding device) and/or a screw assembly device. However, this is an example, and the third manufacturing line 130 may further include a device for manufacturing the battery device 500. For example, the third manufacturing line 130 may further include a charging and discharging device of the battery device 500, a device for measuring insulation resistance (IR) and open circuit voltage (OCV) of the battery device 500, a device for inspecting a weight and/or dimensions of the battery device 500, a safety cap assembly device, and/or a labeling device. However, this is an example, and the third manufacturing line 130 may further include a device for manufacturing the battery device 500.

FIG. 2 is a perspective view of a battery cell according to an embodiment of the present disclosure.

Referring to FIG. 2, the battery cell 200 may include a pouch 210, an electrode assembly 220, and the electrode lead 230. The battery cell 200 may be a secondary battery. For example, the battery cell 200 may be a lithium ion battery but is not limited thereto. For example, the battery cell 200 may be a nickel-cadmium battery, a nickel-metal hydride battery, or a nickel-hydrogen battery that may be charged and discharged.

The pouch 210 may form at least a portion of the exterior of the battery cell 200. The pouch 210 may include an electrode accommodating portion 211 accommodating the electrode assembly 220 and a sealing portion 215 sealing at least a portion of the circumference of the electrode accommodating portion 211. The electrode accommodating portion 211 may provide a space to accommodate the electrode assembly 220 and an electrolyte.

The sealing portion 215 may be formed by bonding at least a portion of the circumference of the pouch 210. The sealing portion 215 may be formed in the form of a flange extending outwardly from the electrode accommodating portion 211, which is formed in the shape of a container, and may be disposed along at least a portion of an outer portion of the electrode accommodating portion 211. In an embodiment, the sealing portion 215 may include a first sealing portion 215a in which the electrode lead 230 is located and a second sealing portion 215b in which the electrode lead 230 is not located. A portion of the electrode lead 230 may be protruding out or exposed externally of the pouch 210. To increase the sealing degree of the first sealing portion 215a and, at the same time, ensure an electrical insulation state in a position at which the electrode lead 230 protrudes out of the pouch 210, the electrode lead 230 may be covered by an insulating film 240. The insulating film 240 may be formed of a film material thinner than the electrode lead 230 and may be attached to both sides of the electrode lead 230.

In an embodiment, the electrode leads 230 may be arranged on both sides of the battery cell 200 in a longitudinal direction (a Y-axis direction) to face in opposite directions. For example, the electrode lead 230 may include a positive electrode lead 230a having a first polarity (e.g., a positive electrode) facing one side in the longitudinal direction (Y-direction as shown in FIG. 2) of the battery cell 200 and a negative electrode lead 230b having a second polarity (e.g., a negative electrode) facing in the other side in the longitudinal direction of the battery cell 200. In the embodiment shown in FIG. 1, the sealing portion 215 may include two first sealing portions 215a in which the electrode lead 230 is disposed and one second sealing portion 215b in which the electrode lead 230 is not disposed.

A direction in which the electrode lead 230 is located may be selectively designed. In an embodiment (e.g., FIG. 2), the electrode lead 230 may include the positive electrode lead 230a and the negative electrode lead 230b located in the opposite direction of the positive electrode lead 230a with respect to the electrode assembly 220. In FIG. 2, the electrode leads 230 are illustrated to be disposed to face in the opposite directions on both sides of the battery cell 200 in the longitudinal direction (e.g., the Y-axis direction), but the structure of the electrode leads 230 is not limited thereto. For example, the two electrode leads 230 may be arranged substantially in parallel in the longitudinal direction (e.g., the Y-axis direction) of the battery cell 200.

Furthermore, the pouch 210 is not limited to a structure in which the sealing portion 215 is formed on three sides by folding a single sheet of outer casing as shown in FIG. 2.

In an embodiment, at least a portion of the sealing portion 215 may be formed to be folded at least once. By folding at least a portion of the sealing portion 215, bonding reliability of the sealing portion 215 may be improved and the region of the sealing portion 215 may be minimized. In the sealing portion 215 according to an embodiment, the second sealing portion 215b (in which the electrode lead 230 is not disposed) may be folded twice and then fixed by an adhesive member 217. For example, the second sealing portion 215b may be folded by 180° along a first bending line C1 and then folded again along a second bending line C2. Here, the inside of the second sealing portion 215b may be filled with the adhesive member 217.

An angle at which the second sealing portion 215b is bent or the number of times the second sealing portion 215b is bent may be changed. For example, in an embodiment (not illustrated), the second sealing portion 215b may be folded by 90° with respect to the first sealing portion 215a.

The electrode assembly 220 may include a cathode plate, an anode plate, and a separator. The separator may prevent contact between the cathode plate and the anode plate. Those skilled in the art will understand that the electrode assembly 220 may be manufactured using a variety of methods including, for example, a stacking type, jelly roll-type, or Z-folded.

In an embodiment, manufacturing of the battery cell 200 (e.g., cutting and bending the electrode lead 230 of FIG. 2), and/or inspection of the battery cell 200 (e.g., insulation resistance (IR) measurement, open circuit voltage (OCV) measurement) may be performed using the first manufacturing line 110.

FIG. 3 is an exploded perspective view of a cell assembly according to an embodiment of the present disclosure.

Referring to FIG. 3, the cell assembly 300 may include a plurality of battery cells 200. The description of the battery cell 200 in FIG. 2 may be applied to the battery cell 200 in FIG. 3. The cell assembly 300 of FIG. 3 may be manufactured using the first manufacturing line 110 of FIG. 1.

According to an embodiment, the cell assembly 300 may include a plurality of stacked battery cells 200. In an embodiment, stacking of the plurality of battery cells 200 may be performed by a stacking device of the first manufacturing line 110. For example, the first manufacturing line 110 may include a cell assembly stacking device.

According to an embodiment, the cell assembly 300 may include a thermal barrier 310 disposed between at least some of the plurality of battery cells 200. The thermal barrier 310 may reduce heat transfer between the battery cells 200. By adding one or more thermal barriers 310, a thermal runaway may be reduced or prevented. In an embodiment, the thermal barrier 310 may include a mica sheet and/or a thermal pad. In an embodiment, the thermal barrier 310 may be attached to the battery cell 200 by a thermal barrier attachment device of the first manufacturing line 110. The thermal barrier attachment device is a known device.

According to an embodiment, the cell assembly 300 may include an adhesive member 320. The adhesive member 320 may be disposed between the plurality of battery cells 200 and/or between the battery cell 200 and the thermal barrier 310. The adhesive member 320 may fix the positions of the plurality of battery cells 200. The adhesive member 320 may be an adhesive tape or an adhesive, such as, for example, a hot melt adhesive. In an embodiment, the first manufacturing line 110 may include a manufacturing device for attaching or applying the adhesive member 320. The manufacturing device for attaching or applying the adhesive member is a known device.

According to an embodiment, the cell assembly 300 may include a side plate 330. The side plate 330 may be connected to the battery cells 200 located at both ends of the cell assembly 300. For example, the side plate 330 may be attached to the battery cell 200 using an adhesive tape 331. In an embodiment, the first manufacturing line 110 may include an attachment device for coupling the side plate 330. The attachment device is a known device.

According to an embodiment, the structure of the cell assembly 300 may be selectively designed. For example, a shape, voltage, and/or capacity of cell assembly 300 may be selectively changed.

FIG. 4 is a diagram illustrating assembly of a sub-battery module, according to an embodiment of the present disclosure. For example, FIG. 4 is an exploded perspective view of the sub-battery module 400.

Referring to FIG. 4, the sub-battery module 400 may include the cell assembly 300. The description of the cell assembly 300 of FIG. 3 may be applied to the sub-battery module 400 of FIG. 4. The sub-battery module 400 of FIG. 4 may be manufactured using the second manufacturing line 120 of FIG. 1.

According to an embodiment, the sub-battery module 400 may include a busbar assembly 410. The busbar assembly 410 may be connected to the cell assembly 300. The busbar assembly 410 may include a busbar 411 connected to the electrode lead 230 of the cell assembly 300 and a busbar frame 412 supporting the busbar 411. The busbar 411 may electrically connect the electrode lead 230 to an external component of the sub-battery module 400. The coupling of the busbar assembly 410 to the cell assembly 300 may be performed by the second manufacturing line 120 of FIG. 1. For example, the second manufacturing line 120 may include a welding device for welding the electrode lead 230 of the cell assembly 300 and the busbar 411, and/or an alignment device for inserting the electrode lead 230 into a slit formed in the busbar 411. The welding device is a known device.

According to an embodiment, the sub-battery module 400 may include a sensing module assembly 420. The sensing module assembly 420 may include a flexible printed circuit board (FPCB) 421, an upper cover 422 supporting the FPCB 421, and a connection portion 423 extending from the FPCB 421. The FPCB 421 may be electrically connected to an external device of the sub-battery module 400 and may transmit electrical signals from the external device to the sub-battery module 400. The sensing module assembly 420 may be connected to the busbar assembly 410. For example, the connection portion 423 may be welded to the busbar assembly 410. The coupling of the busbar assembly 410 and the sensing module assembly 420 may be performed by the second manufacturing line 120 of FIG. 1. For example, the second manufacturing line 120 may include a sensing module assembly device for stacking and/or welding the busbar assembly 410 and the sensing module assembly 420. The sensing module assembly device a known device using welding.

According to an embodiment, the sub-battery module 400 may include an insulating cover 430 for covering at least a portion of the busbar assembly 410. For example, only a portion (e.g., a terminal 413) of the busbar assembly 410 may be exposed externally of the insulating cover 430. In an embodiment, the insulating cover 430 may be connected to (e.g., attached to) the busbar assembly 410 and/or the side plate 330. The second manufacturing line 120 may include an insulating cover assembly device for assembling the insulating cover 430 to the busbar assembly 410 and/or the side plate 330. The insulating cover assembly device is a known device for coupling the insulating cover 430 to the busbar assembly 410 and/or the side plate 330 using welding and/or bolting.

According to an embodiment, the sub-battery module 400 may include an end plate 440. The end plate 440 may cover the insulating cover 430. The insulating cover 430 may be disposed between the busbar assembly 410 and the end plate 440. According to an embodiment, the end plate 440 may form at least a portion of the exterior of the sub-battery module 400. According to an embodiment, the end plate 440 may be coupled to the side plate 330 and/or the insulating cover 430 using a coupling member (not illustrated) (e.g., a screw). The second manufacturing line 120 may include a coupling device for coupling the end plate 440 to the side plate 330 and/or the insulating cover 430. The coupling device is a known device for coupling the end plate 440 to the side plate 330 and/or the insulating cover 430 using welding and/or bolting.

As for the structure of the sub-battery module 400, at least some of the components of the sub-battery module 400 disclosed in this specification may be excluded, or a component not disclosed may be added to the sub-battery module 400. In addition, each of the busbar assembly 410, the sensing module assembly 420, the insulating cover 430, and the end plate 440 disclosed in this specification is described as an example and may have a different form.

FIGS. 5A and 5B are diagrams illustrating an assembly process of a battery device according to an embodiment of the present disclosure. For example, FIG. 5A is an exploded perspective view of the assembled battery device 500. FIG. 5B is a perspective view of the battery device 500.

Referring to FIGS. 5A and 5B, the battery device 500 may include a plurality) of sub-battery modules 400, for example, as illustrated in FIG. 5A, two sub-battery modules 400a and 400b. The battery device 500 may be a battery module or a battery pack. The description of the sub-battery module 400 of FIG. 4 may be applied to the sub-battery module 400 of FIGS. 5A and 5B. The battery device 500 of FIGS. 5A and 5B may be manufactured using the third manufacturing line 130 of FIG. 1.

According to an embodiment, the battery device 500 may include a lower case 510 and an adhesive 520 applied to the lower case 510. The lower case 510 may have a structure to accommodate a plurality (e.g., two) sub-battery modules 400. For example, the lower case 510 may include a first region 511 to which a first adhesive 521 is applied and a second region 512 to which a second adhesive 522 is applied and spaced apart from the first region 511. The lower case 510 may include a partition 513 located between the first region 511 and the second region 512. The partition 513 may be connected to the lower case 510 using a plurality of coupling members 514 (e.g., screws).

The adhesive 520 may be a thermal adhesive. Bonding of the adhesive 520 to the lower case 510 may be performed by the third manufacturing line 130 of FIG. 1. For example, the third manufacturing line 130 may include a lower case supply device (not illustrated) and an adhesive application device (not illustrated). The lower case supply device may include conveyor belt for transferring the lower case 510.

According to an embodiment, the battery device 500 may include a plurality (e.g., two) of sub-battery modules 400a and 400b coupled to the lower case 510. For example, two sub-battery modules 400a and 400b may be disposed on the first adhesive 521 and the second adhesive 522, respectively. The partition 513 may be located between the two sub-battery modules 400. According to an embodiment, the sub-battery module 400 may be coupled to the lower case 510. For example, the sub-battery module 400 may be connected to the lower case 510 using a plurality of coupling members (e.g., screws). Coupling of the sub-battery module 400 to the lower case 510 may be performed by the third manufacturing line 130 of FIG. 1. For example, the third manufacturing line 130 may include a sub-battery module supply device (not illustrated) and a sub-battery module coupling device (not illustrated). The sub-battery module supply device may include conveyor belt for transferring the sub-battery module 400. The sub-battery module coupling device may include welding member and/or coupling member.

According to an embodiment, the battery device 500 may include an upper case 530. For example, one upper case 530 may cover the top of the two sub-battery modules 400. According to an embodiment, the upper case 530 may be coupled to the side plate 330 and the end plate 440. Coupling of the sub-battery module 400 to the lower case 510 may be performed by the third manufacturing line 130 of FIG. 1. For example, the third manufacturing line 130 may include an upper case supply device (not illustrated) and an upper case coupling device (not illustrated). The upper case supply device may include conveyor belt for transferring the upper case 530.

According to an embodiment, the battery device 500 may include a sensing module (not illustrated) and/or a safety cap 550. In an embodiment, the sensing module may detect information on the battery device 500. The sensing module may be connected to the sensing module assembly 420. For example, the upper case 530 may include an opening for accommodating the sensing module, and the sensing module may be coupled to the sensing module assembly 420 through the opening of the upper case 530. The safety cap 550 may protect the terminal 413 of the busbar assembly 410 from the outside of the battery device 500. For example, the safety cap 550 may cover the terminal 413. The safety cap 550 may be provided in a number corresponding to the number of terminals 413. Coupling of the sensing module and/or the safety cap 550 may be performed by the third manufacturing line 130 of FIG. 1. For example, the third manufacturing line 130 may include a sensing module supply device (not illustrated), a safety cap supply device (not illustrated), a sensing module coupling device (not illustrated), a safety cap coupling device (not illustrated) for couple the safety cap 550 to terminal 413, and/or a safety cap inspection device (not illustrated) for inspect the safety cap 550. The sensing module supply device may include conveyor belt for transferring the sensing module. The safety cap supply device may include conveyor belt for transferring the safety cap 550.

The structure of the battery device 500 is optional, and at least some of the components of the battery device 500 disclosed in this specification may be excluded. In addition, components not disclosed may be added to the battery device 500. In addition, each of the lower case 510, adhesive 520, sub-battery module 400, upper case 530, and safety cap 550 disclosed in this specification is described as an example and may have a different form.

According to an embodiment of the present disclosure, the battery device manufacturing system may include a plurality of manufacturing lines. By arranging a plurality of manufacturing lines in a decoupled manner, space use efficiency and production efficiency may increase and various models may be produced simultaneously.

Only specific examples of implementations of certain embodiments are described. Variations, improvements and enhancements of the disclosed embodiments and other embodiments may be made based on this disclosure. Furthermore, the embodiments may be combined to form additional embodiments.

## Claims

1. A battery device manufacturing system comprising:
a plurality of first manufacturing lines configured to manufacture a plurality of battery cells and a cell assembly in which the plurality of battery cells are stacked;
a plurality of second manufacturing lines configured to couple a busbar assembly to the cell assembly to manufacture a sub-battery module; and
a plurality of third manufacturing lines configured to couple the sub-battery module to a case to manufacture a battery module,
wherein one of the plurality of third manufacturing lines is configured to receive the sub-battery module from each of two second manufacturing lines among the plurality of second manufacturing lines.

2. The battery device manufacturing system of claim 1, further comprising:
a first transfer device configured to transfer the cell assembly from the plurality of first manufacturing lines to the plurality of second manufacturing lines; and
a second transfer device configured to transfer the sub-battery module from the plurality of second manufacturing lines to the plurality of third manufacturing lines.

3. The battery device manufacturing system of claim 2, wherein
the plurality of first manufacturing lines include at least one first cell assembly manufacturing line configured to manufacture a first cell assembly and at least one second cell assembly manufacturing line configured to manufacture a second cell assembly, different from the first cell assembly,
the plurality of second manufacturing lines include at least one first sub-battery module manufacturing line configured to manufacture a first sub-battery module and at least one second sub-battery module manufacturing line configured to manufacture a second sub-battery module, different from the first sub-battery module, and
the plurality of third manufacturing lines include at least one first battery device manufacturing line configured to manufacture a first battery device and at least one second battery device manufacturing line configured to manufacture a second battery device, different from the first battery device.

4. The battery device manufacturing system of claim 3, wherein the first transfer device includes a 1-1 transfer device configured to transfer the first cell assembly from the at least one first cell assembly manufacturing line to the at least one first sub-battery module manufacturing line, and a 1-2 transfer device configured to transfer the second cell assembly from the at least one second cell assembly manufacturing line to the at least one second sub-battery module manufacturing line.

5. The battery device manufacturing system of claim 3, wherein the second transfer device includes a 2-1 transfer device configured to transfer the first sub-battery module from the at least one first sub-battery module manufacturing line to the at least one first battery device manufacturing line and a 2-2 transfer device configured to transfer the second sub-battery module from the at least one second sub-battery module manufacturing line to the at least one second battery device manufacturing line.

6. The battery device manufacturing system of claim 2, wherein the first transfer device and the second transfer device include at least one of an overhead conveyer belt or an autonomous vehicle.

7. The battery device manufacturing system of claim 2, wherein at least a portion of the first transfer device is located between the plurality of first manufacturing lines and the plurality of second manufacturing lines and between the plurality of first manufacturing lines and the plurality of third manufacturing lines.

8. The battery device manufacturing system of claim 2, wherein at least a portion of the second transfer device is located between the plurality of second manufacturing lines and the plurality of third manufacturing lines.

9. The battery device manufacturing system of any one of preceding claims, wherein:
the plurality of first manufacturing lines are arranged in a first direction,
the plurality of second manufacturing lines are arranged in a second direction,
the plurality of third manufacturing lines are arranged in a third direction, and
the third direction is different from the first direction or the second direction.

10. The battery device manufacturing system of claim 9, wherein the second direction is parallel to the first direction, and the third direction is perpendicular to the first direction and the second direction.

11. The battery device manufacturing system of any one of preceding claims, wherein each of the plurality of first manufacturing lines includes at least one of a device for measuring insulation resistance of the plurality of battery cells, a device for measuring an open circuit voltage of the plurality of battery cells, a device for cutting and bending an electrode lead of the battery cells, a cell assembly stacking device, a thermal barrier attachment device, and an adhesive member attachment device.

12. The battery device manufacturing system of any one of preceding claims, wherein each of the plurality of second manufacturing lines includes at least one of a welding device for coupling the cell assembly to the busbar assembly, a welding inspection device, a sensing module assembly device, an insulating cover assembly device, and an end plate coupling device.

13. The battery device manufacturing system of any one of preceding claims, wherein each of the plurality of third manufacturing lines includes at least one of a lower case supply device, an adhesive application device for applying an adhesive to a lower case, a sub-battery module assembly device for coupling the sub-battery module to the lower case, an upper case coupling device, a sensing module coupling device, a safety cap coupling device, a device for inspecting weight of the battery device, a device for inspecting dimensions of the battery device, and a device for charging and discharging the battery device.

14. The battery device manufacturing system of any one of preceding claims, wherein one of the plurality of second manufacturing lines is configured to receive the cell assembly from each of two first manufacturing lines among the plurality of first manufacturing lines.
